(19)

Europäisches Patentamt
European Patent Office
Office européen des brevets

(11)  **EP 3 136 023 A1**

(12)  # EUROPEAN PATENT APPLICATION
published in accordance with Art. 153(4) EPC

(43) Date of publication:
01.03.2017 Bulletin 2017/09

(21) Application number: 14886046.3

(22) Date of filing: 17.03.2014

(51) Int Cl.:
*F25B 41/06* (2006.01)   *F25B 1/00* (2006.01)
*F25B 13/00* (2006.01)

(86) International application number:
PCT/JP2014/057036

(87) International publication number:
WO 2015/140877 (24.09.2015 Gazette 2015/38)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicants:
• Mitsubishi Electric Corporation
Chiyoda-ku
Tokyo 100-8310 (JP)

• Asahi Glass Company, Limited
Tokyo 100-8405 (JP)

(72) Inventor: YAMASHITA, Koji
Tokyo 100-8310 (JP)

(74) Representative: Pfenning, Meinig & Partner mbB
Patent- und Rechtsanwälte
Theresienhöhe 11a
80339 München (DE)

(54)  **THROTTLING DEVICE AND REFRIGERATION CYCLE DEVICE**

(57)  Provided is an expansion device 16 configured to form a refrigerant circuit using refrigerant containing a substance having such a property as to cause a disproportionation reaction, the expansion device 16 including: a valve body 44 having a cylindrical shape; and an expansion unit 43 including a valve seat, the expansion unit 43 being configured to vary an opening area by insertion of the valve body 44 into the valve seat through movement of the valve body 44 in an axis direction thereof, in which: a distal end portion of the valve body 44 to be inserted into the expansion unit 43 is formed to have an angle larger than 0 from a direction perpendicular to the axial direction of the valve body 44.

FIG. 5

EP 3 136 023 A1

**Description**

Technical Field

The present invention relates to an expansion device and the like to be used for a refrigeration cycle apparatus such as an air-conditioning apparatus to be applied to, for example, a multi-air-conditioning apparatus for a building.

Background Art

In a refrigeration cycle apparatus configured to form a refrigerant circuit configured to circulate refrigerant therethrough so as to perform air-conditioning and other operations, like a multi-air-conditioning apparatus for a building, R410A that is incombustible, R32 having low combustibility, or a highly combustible substance containing hydrogen and carbon, such as propane, is used as the refrigerant. When being released into atmosphere, the above-mentioned substances are decomposed in the atmosphere to turn into different substances with different time lengths. In the refrigeration cycle apparatus, however, the above-mentioned substances have high stability and therefore can be used as the refrigerant for a period of time as long as to several tens of years.

In contrast, some of the substances each containing hydrogen and carbon are poor in stability even in a refrigeration cycle apparatus and hence are each hardly used as refrigerant. Those substances poor in stability are, for example, substances each having such a property as to cause a disproportionation reaction. The term "disproportionation" refers to the property by which substances of the same kind react with each other to change into another substance. For example, when certain strong energy is applied to refrigerant under a state in which a distance between adjacent substances is extremely small, such as a liquid state, the energy causes a disproportionation reaction and hence the adjacent substances react with each other to change into another substance. When the disproportionation reaction occurs, heat generation occurs to cause an abrupt increase in temperature and hence an abrupt increase in pressure may occur. For example, when a substance having such a property as to cause a disproportionation reaction is used as the refrigerant of a refrigeration cycle apparatus, and is enclosed in a pipe made of copper or the like, the pipe cannot completely withstand an increase in pressure of the refrigerant therein and hence an accident, such as pipe rupture, may occur. For example, 1,1,2-trifluoroethylene (HFO-1123) or acetylene has been known as the substance having such a property as to cause a disproportionation reaction.

In addition, there exists a heat cycle system (refrigeration cycle apparatus) using 1,1,2-trifluoroethylene (HFO-1123) as a working medium for a heat cycle (for example, Patent Literature 1).

Citation List

Patent Literature

Patent Literature 1: International Patent WO 12/157764A (page 3, page 12, Fig. 1, etc.)

Summary of Invention

Technical Problem

In the refrigeration cycle apparatus such as the thermal cycle system disclosed in Patent Literature 1, 1,1,2-trifluoroethylene (HFO-1123) is disclosed to be used as a working medium for a thermal cycle. Here, 1,1,2-trifluoroethylene (HFO-1123) is a substance having such a property as to cause a disproportionation reaction. When the substance having such a property as to cause a disproportionation reaction is used as the refrigerant as it is, the adjacent substances may react with each other to turn into a different substance due to some energy at a location where the substance in a liquid state is present, such as a liquid or a two-phase substance, in which a distance between the adjacent substances is extremely small, failing to function as the refrigerant. In addition, there is a fear that an accident, e.g., pipe rupture may occur due to a sudden pressure rise. Therefore, there is a problem in that, for the use as the refrigerant, the substance having such a property as to cause a disproportionation reaction needs to be used so as not to cause the disproportionation reaction. Therefore, efforts to prevent occurrence of the disproportionation reaction are required. However, in Patent Literature 1, for example, there is no disclosure of a method for realizing an apparatus capable of preventing the occurrence of the disproportionation reaction and the like.

The present invention has been made to solve the problem described above, and provides an expansion device having a structure in which energy received externally by refrigerant is reduced, and the like.

Solution to Problem

According to one embodiment of the present invention, there is provided an expansion device configured to form a refrigerant circuit using refrigerant containing a substance having such a property as to cause a disproportionation reaction, the expansion device including: a valve body having a cylindrical shape; and an expansion unit including a valve seat, the expansion unit being configured to vary an opening area by insertion of the valve body into the valve seat through movement of the valve body in an axis direction thereof, in which a distal end portion of the valve body to be inserted into the expansion unit is formed to have an angle larger than 0 from a direction perpendicular to the axial direction of the valve body. Collision energy generated when the refrigerant flows into the expansion device can be reduced. Thus, the substance having such a property as to cause a disproportionation reaction can be used safely as the refrigerant.

Advantageous Effects of Invention

In the expansion device of the one embodiment of the present invention, the shape or direction of the outlet of an inflow pipe is devised to reduce collision energy at the time of collision between refrigerant and the inner wall surface of a vessel in the vessel. Accordingly, there can be obtained an expansion device that prevents, for example, the occurrence of an accident, such as pipe rupture in which a substance having such a property as to cause a disproportionation reaction, such as 1,1,2-trifluoroethylene (HFO-1123), causes a disproportionation reaction to be unable to be used as refrigerant, and hence that enables the substance to be safely used as refrigerant.

Brief Description of Drawings

[Fig. 1] Fig. 1 is a schematic view for illustrating an example of installation of a refrigeration cycle apparatus according to a first embodiment of the present invention.
[Fig. 2] Fig. 2 is a circuit configuration diagram of the refrigeration cycle apparatus according to the first embodiment of the present invention.
[Fig. 3] Fig. 3 is a circuit configuration diagram of the refrigeration cycle apparatus according to the first embodiment of the present invention during a cooling operation.
[Fig. 4] Fig. 4 is a circuit configuration diagram of the refrigeration cycle apparatus according to the first embodiment of the present invention during a heating operation.
[Fig. 5] Fig. 5 is a schematic view of a configuration of an expansion device of the refrigeration cycle apparatus according to the first embodiment of the present invention.
[Fig. 6] Fig. 6 is a schematic view of another configuration of the expansion device of the refrigeration cycle apparatus according to the first embodiment of the present invention.
[Fig. 7] Fig. 7 is a circuit configuration diagram of a refrigeration cycle apparatus according to a second embodiment of the present invention.

Description of Embodiments

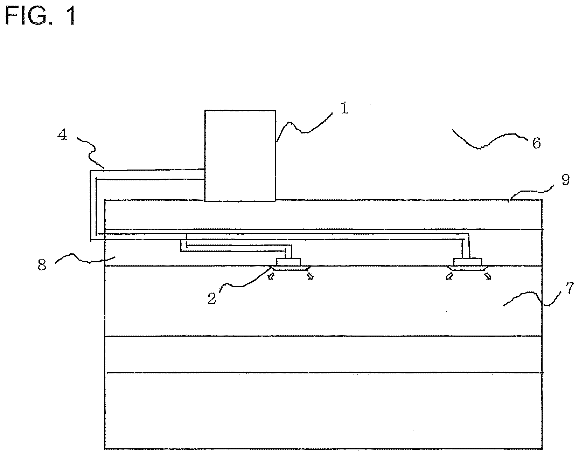

Now, a refrigeration cycle apparatus according to embodiments of the present invention is described referring to the drawings. In the drawings referred to below including Fig. 1, components denoted by the same reference symbols correspond to the same or equivalent components. This is common throughout the embodiments described below. Further, the forms of the components described herein are merely examples, and the components are not limited to the forms described herein. In particular, the combinations of the components are not limited to only the combinations in each embodiment, and the components described in another embodiment may be applied to still another embodiment. Further, unless otherwise necessary to be distinguished or specified, a plurality of devices of the same type or other components, which are distinguished from one another by suffixes or in another way, may be described without the suffixes. Further, the upper part and the lower part of the drawings are referred to as "upper side" and "lower side", respectively. Further, in the drawings, the size relationship between the components may be different from the actual size relationship. In addition, a high-and-low relationship or other relationships of temperature, pressure, or other factors are not determined in relation to particular absolute values, but are determined in a relative manner based on a state, an operation, or other factors of systems, devices, or other conditions.

First Embodiment

A first embodiment of the present invention is described referring to the drawings. Fig. 1 is a schematic view for illustrating an example of installation of a refrigeration cycle apparatus according to the first embodiment of the present invention. The refrigeration cycle apparatus illustrated in Fig. 1 is configured to form a refrigerant circuit configured to circulate refrigerant therethrough to use a refrigeration cycle with the refrigerant, thereby being capable of selecting any one of a cooling mode and a heating mode as an operation mode. Here, an air-conditioning apparatus configured to air-condition a space to be air-conditioned (indoor space 7) is described as an example of the refrigeration cycle apparatus according to this embodiment.

In Fig. 1, the refrigeration cycle apparatus according to this embodiment includes one outdoor unit 1 serving as a heat source apparatus, and a plurality of indoor units 2. The outdoor unit 1 and the indoor units 2 are connected to each other by extension pipes (refrigerant pipes) 4 through which the refrigerant is conveyed. Cooling energy or heating energy generated by the outdoor unit 1 is delivered to the indoor units 2.

The outdoor unit 1 is generally arranged in an outdoor space 6, which is a space outside of a construction 9 such as a building (for example, on a rooftop), and is configured to supply the cooling energy or heating energy to the indoor units 2. The indoor units 2 are arranged at positions at which temperature-adjusted air can be supplied to an indoor space 7 being a space inside the construction 9 (for example, residential room), and are configured to supply cooling air or heating air to the indoor space 7 being a space to be air-conditioned.

As illustrated in Fig. 1, in the refrigeration cycle apparatus according to this embodiment, the outdoor unit 1 and each of the indoor units 2 are connected by the two extension pipes 4.

In Fig. 1, an example of a case where the indoor unit 2 is a ceiling cassette type indoor unit is illustrated, but the present invention is not limited thereto. Any types of the indoor unit such as a ceiling-concealed indoor unit or a ceiling-suspended indoor unit may be adopted as long as heating air or cooling air can be blown into the indoor space 7 directly or through a duct or other means.

In Fig. 1, an example of a case where the outdoor unit 1 is installed in the outdoor space 6 is illustrated, but the present invention is not limited thereto. For example, the outdoor unit 1 may be installed in an enclosed space such as a machine room with a ventilation port. Alternatively, the outdoor unit 1 may be installed inside the construction 9 as long as waste heat is exhaustible to the outside of the construction 9 through an exhaust duct. Further, when a water-cooled outdoor unit 1 is adopted, the outdoor unit 1 may be installed inside the construction 9. No particular problem may arise even if the outdoor unit 1 is installed at any place.

Further, the numbers of the outdoor units 1 and the indoor units 2 to be connected are not limited to the numbers as illustrated in Fig. 1, but may be determined depending on the construction 9 in which the refrigeration cycle apparatus according to this embodiment is installed.

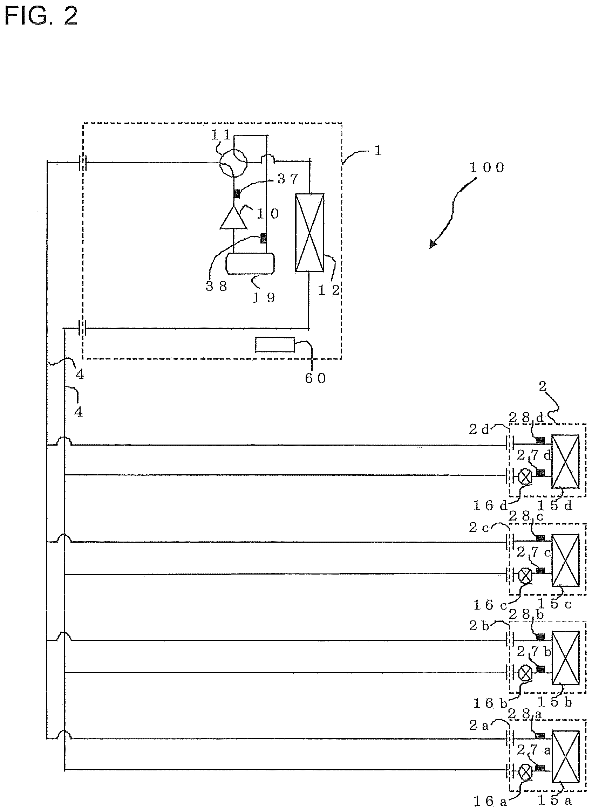

Fig. 2 is a circuit configuration diagram for illustrating an example of a circuit configuration of the refrigeration cycle apparatus according to the first embodiment (hereinafter referred to as "refrigeration cycle apparatus 100"). Referring to Fig. 2, a detailed configuration of the refrigeration cycle apparatus 100 is described. As illustrated in Fig. 2, the outdoor unit 1 and the indoor units 2 are connected to each other by the extension pipes (refrigerant pipes) 4 through which the refrigerant flows.

[Outdoor Unit 1]

In the outdoor unit 1, a compressor 10, a first refrigerant flow switching device 11 such as a four-way valve, a heat source-side heat exchanger 12, and an accumulator 19 are mounted in a serial connection by the refrigerant pipes.

The compressor 10 is configured to suck the refrigerant, and compress the refrigerant into a high-temperature and high-pressure state. For example, the compressor 10 may be a capacity-controllable inverter compressor or other components. The first refrigerant flow switching device 11 is configured to switch a flow of the refrigerant during a heating operation and a flow of the refrigerant during a cooling operation. The heat source-side heat exchanger 12 functions as an evaporator during the heating operation and functions as a condenser (or a radiator) during the cooling operation. Further, the heat source-side heat exchanger 12 serving as a first heat exchanger is configured to exchange heat between air supplied from a fan (not shown) and the refrigerant, thereby evaporating and gasifying the refrigerant or condensing and liquefying the refrigerant. The heat source-side heat exchanger 12 functions as a condenser during an operation of cooling the indoor space 7, and functions as an evaporator during an operation of heating the indoor space 7. The accumulator 19 is mounted on a suction side of the compressor 10 and configured to accumulate surplus refrigerant in the refrigerant circuit, which is generated due to a change in operation mode or the like.

The outdoor unit 1 includes the compressor 10, the first refrigerant flow switching device 11, the heat source-side heat exchanger 12, the accumulator 19, a high-pressure detection device 37, a low-pressure detection device 38, and a controller 60. Further, as the compressor 10, for example, a compressor having a low-pressure shell structure including a compression chamber defined inside a hermetic container placed under a low-refrigerant pressure atmosphere so as to suck and compress low-pressure refrigerant in the hermetic container or a compressor having a high-pressure shell structure including a hermetic container placed under a high-refrigerant pressure atmosphere so as to discharge high-pressure refrigerant compressed in a compression chamber into the hermetic container is used. Further, the outdoor unit 1 includes the controller 60 configured to control the devices based on information detected by various detection devices, an instruction from a remote controller, and the like. For example, a driving frequency of the compressor 10, a rotation speed (including ON/OFF) of a fan, switching of the first refrigerant flow switching device 11 are controlled to execute each of the operation modes described later. Here, the controller 60 according to this embodiment is, for example, a microcomputer including a control arithmetic processing unit such as a central processing unit (CPU). Further, the controller 60 includes a storage unit (not shown) having data containing, as programs, a processing procedure relating to the control and other operations. Then, the control arithmetic processing unit executes the processing based on the data of the program to realize the control.

[Indoor Unit 2]

Each of the indoor units 2 includes a load-side heat exchanger 15 mounted therein, serving as a second heat exchanger. The load-side heat exchanger 15 is connected to the outdoor unit 1 by the extension pipes 4. The load-side heat exchanger 15 is configured to exchange heat between air supplied from a fan (not shown) and the refrigerant so that heating air or cooling air to be supplied to the indoor space 7 is generated. The load-side heat exchangers 15 function as condensers during the operation of heating the indoor space 7 and function as evaporators during the operation of cooling the indoor space 7.

In Fig. 2, an example of a case where four indoor units 2 are connected is illustrated, and the four indoor units are illustrated as an indoor unit 2a, an indoor unit 2b, an indoor unit 2c, and an indoor unit 2d, respectively, in the stated order from the bottom of the drawing sheet. Further, corresponding to the indoor units 2a to 2d, the respective load-side heat exchangers 15 are illustrated as a load-side heat exchanger 15a, a load-side heat exchanger 15b, a load-side heat exchanger 15c, and a load-side heat exchanger 15d in the stated order from the bottom of the drawing sheet as well. Similarly to Fig. 1, the number of the indoor units 2 to be connected is not limited to four as illustrated in Fig. 2.

Each of the operation modes to be executed by the refrigeration cycle apparatus 100 is described. The refrigeration cycle apparatus 100 is configured to determine the operation mode of the outdoor unit 1 as any one of a cooling operation mode and a heating operation mode based on an instruction from each indoor unit 2. That is, the refrigeration cycle apparatus 100 is capable of performing the same operation (cooling operation or heating operation) among all the indoor units 2 to adjust the indoor temperature. Running and idling of each indoor unit 2 may be switched freely in any of the cooling operation mode and the heating operation mode.

The operation modes to be executed by the refrigeration cycle apparatus 100 include the cooling operation mode in which all the running indoor units 2 execute the cooling operation (including idling), and the heating operation mode in which all the running indoor units 2 execute the heating operation (including idling). Now, each of the operation modes is described with the flows of the refrigerant.

[Cooling Operation Mode]

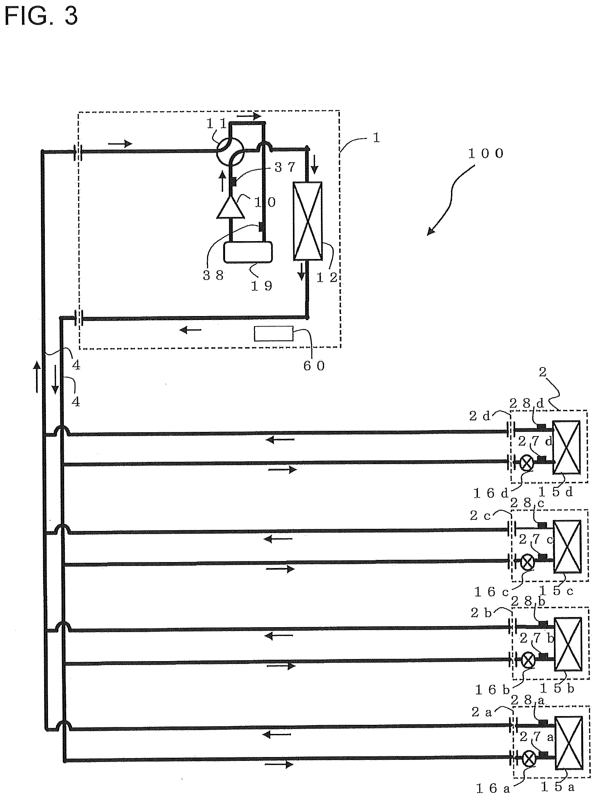

Fig. 3 is a refrigerant circuit diagram for illustrating the flow of the refrigerant during the cooling operation mode of the refrigeration cycle apparatus 100 when discharge temperature is low. In Fig. 3, the cooling operation mode is described taking as an example a case where a cooling load is generated in all the load-side heat exchangers 15. In Fig. 3, the pipes indicated by the thick lines are the pipes through which the refrigerant flows. A direction of the flow of the refrigerant is indicated by the solid arrows.

In the case of the cooling operation mode illustrated in Fig. 3, the first refrigerant flow switching device 11 in the outdoor unit 1 is switched so that the refrigerant discharged from the compressor 10 flows into the heat source-side heat exchanger 12. Low-temperature and low-pressure refrigerant is compressed by the compressor 10 and discharged as high-temperature and high-pressure gas refrigerant. The high-temperature and high-pressure gas refrigerant discharged from the compressor 10 flows into the heat source-side heat exchanger 12 through the first refrigerant flow switching device 11. Then, after the high-temperature and high-pressure gas refrigerant is condensed and liquefied into high-pressure liquid refrigerant in the heat source-side heat exchanger 12 while rejecting heat to the outdoor air, the high-pressure liquid refrigerant flows out of the outdoor unit 1.

The high-pressure liquid refrigerant flowing out of the outdoor unit 1 passes through the extension pipe 4 to flow into each of the indoor units 2 (2a to 2d). The high-pressure liquid refrigerant flowing into the indoor units 2 (2a to 2d) flows into an expansion devices 16 (16a to 16d) to be expanded and depressurized into low-temperature and low-pressure two-phase refrigerant by the expansion devices 16 (16a to 16d). Further, the refrigerant flows into each of the load-side heat exchangers 15 (15a to 15d) functioning as an evaporator. The refrigerant flowing into the load-side heat exchangers 15 takes away heat from air flowing around the load-side heat exchangers 15 to turn into low-temperature and low-pressure gas refrigerant. Then, the low-temperature and low-pressure gas refrigerant flows out of the indoor units 2 (2a to 2d), and passes through the extension pipe 4 to flow into the outdoor unit 1 again. Then, the refrigerant passes through the first refrigerant flow switching device 11, and is then sucked into the compressor 10 again through the accumulator 19.

At this time, an opening degree (opening area) of each of the expansion devices 16a to 16d is controlled so that a temperature difference (degree of superheat) between a temperature detected by a load-side heat exchanger gas refrigerant temperature detection device 28 and an evaporation temperature transmitted from the controller 60 of the outdoor unit 1 to a controller (not shown) of each of the indoor units 2 approximates a target value.

When the cooling operation mode is executed, the refrigerant is not required to be controlled to flow into the load-side heat exchanger 15 without a heat load (including a thermostat-off state), and hence the operation is stopped. At this time, the expansion device 16 corresponding to the idle indoor unit 2 is fully closed or set at a small opening degree for preventing the flow of refrigerant.

[Heating Operation Mode]

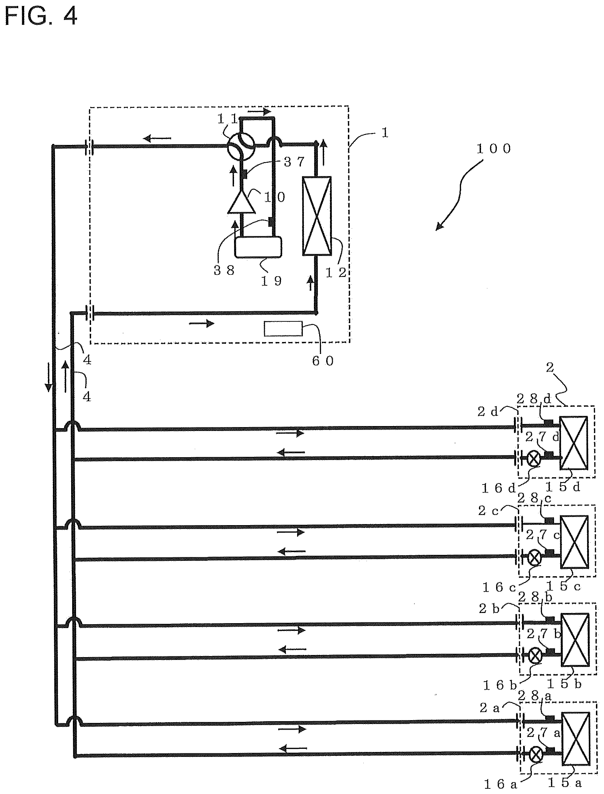

Fig. 4 is a refrigerant circuit diagram for illustrating a flow of refrigerant during the heating operation mode of the refrigeration cycle apparatus 100. In Fig. 4, the heating operation mode is described taking as an example a case where a heating load is generated in all of the load-side heat exchangers 15. In Fig. 4, the pipes indicated by the thick lines are the pipes through which the refrigerant flows, and directions of the flows of refrigerant are indicated by the solid arrows.

In the case of the heating operation mode illustrated in Fig. 4, the first refrigerant flow switching device 11 in the outdoor unit 1 is switched so that the refrigerant discharged from the compressor 10 is controlled to flow into the indoor units 2 without passing through the heat source-side heat exchanger 12. Low-temperature and low-pressure refrigerant is compressed into high-temperature and high-pressure gas refrigerant by the compressor 10 to be discharged from the compressor 10. The high-temperature and high-pressure gas refrigerant passes through the first refrigerant flow switching device 11 to flow out of the outdoor unit 1. The high-temperature and high-pressure gas refrigerant flowing out of the outdoor unit 1 passes through the extension pipe 4 to flow into each of the indoor units 2 (2a to 2d). The high-temperature and high-pressure gas refrigerant flowing into the indoor units 2 (2a to 2d) flows into each of the load-side heat exchangers 15 (15a to 15d), and is condensed and liquefied into high-temperature and high-pressure liquid refrigerant while rejecting heat to air flowing around the load-side heat exchangers 15 (15a to 15d). The high-temperature and high-pressure liquid refrigerant flowing out of the load-side heat exchangers 15 (15a to 15d) flows into the expansion devices 16 (16a to 16d) to be expanded and depressurized into low-temperature and low-pressure two-phase refrigerant by the expansion devices 16 (16a to 16d), and flows out of the indoor units 2 (2a to 2d). The low-temperature and low-pressure two-phase refrigerant flowing out of the indoor units 2 passes through the extension pipe 4 to flow into the outdoor unit 1 again.

At this time, the opening degree (opening area) of each of the expansion devices 16a to 16d is controlled so that a temperature difference (degree of subcooling) between a condensing temperature transmitted from the controller 60 of the outdoor unit 1 to a controller (not shown) of each of the indoor units 2 and a temperature detected by a load-side heat exchanger liquid refrigerant temperature detection device 27 approximates a target value.

The low-temperature and low-pressure two-phase refrigerant flowing into the outdoor unit 1 flows into the heat source-side heat exchanger 12 and takes away heat from air flowing around the heat source-side heat exchanger 12 to be evaporated into low-temperature and low-pressure gas refrigerant or low-temperature and low-pressure two-phase refrigerant with high quality. The low-temperature and low-pressure gas refrigerant or two-phase refrigerant is sucked into the compressor 10 again through the first refrigerant flow switching device 11 and the accumulator 19.

When the heating operation mode is executed, the refrigerant is not required to be controlled to flow into the load-side heat exchanger 15 without a heat load (including a thermostat-off state). When the expansion device 16 corresponding to the load-side heat exchanger 15 without a heating load is fully closed or is set to a small opening degree for preventing the flow of refrigerant in the heating operation mode, however, the refrigerant is cooled and condensed inside the idle load-side heat exchanger 15 by ambient air so that the refrigerant may stagnate, resulting in shortage of refrigerant in the entire refrigerant circuit. Therefore, during the heating operation, the opening degree (opening area) of the expansion device 16 corresponding to the load-side heat exchanger 15 without a heat load is set to a large opening degree, for example, is fully opened, thereby preventing the stagnation of refrigerant.

Further, a four-way valve is generally used for the first refrigerant flow switching device 11. However, the refrigerant flow switching device 11 is not limited thereto. A plurality of two-way passage switching valves or a plurality of three-way passage switching valves may be used so that the refrigerant flows in the same way.

Further, although the case where the accumulator 19 configured to accumulate the surplus refrigerant is included in the refrigerant circuit is described herein, the accumulator 19 is not required to be provided when the amount of surplus refrigerant is small as in a case where the extension pipes 4 are short, the number of indoor units 2 is one, or other cases.

As described above, in the refrigeration cycle apparatus 100 according to this embodiment, high-pressure liquid refrigerant flows into the expansion devices 16 (16a to 16d), of which low-temperature and low-pressure two-phase refrigerant flows out. However, when the amount of refrigerant filling the refrigerant circuit is small, for example, the refrigerant flowing out of the condenser is sometimes in a two-phase state. Further, in a multi-type air-conditioning apparatus including a plurality of indoor units 2 or other apparatus, the extension pipes 4 tend to be long. In this case, the refrigerant is sometimes placed in a two-phase state due to a pressure loss in the extension pipes 4 during the cooling operation. In such a case, the refrigerant in the two-phase state corresponding to a mixed state of a gas and a liquid flows into the expansion devices 16.

[Kinds of Refrigerant]

When a substance generally used as the refrigerant, such as R32 or R410A, is used as the refrigerant to be used in the refrigeration cycle apparatus 100, the substance may be used as it is without efforts to improve stability of the refrigerant inside the refrigerant circuit. In this embodiment, however, a substance having such a property as to cause a disproportionation reaction, such as 1,1,2-trifluoroethylene (HFO-1123) represented by $C_2HiF_3$ and having one double bond in a molecular structure thereof, or a refrigerant mixture obtained by mixing the substance having such a property as to cause a disproportionation reaction and another substance is used as the refrigerant. For example, a tetrafluoropropene represented by $C_3H_2F_4$ (such as HFO-1234yf that is 2,3,3,3-tetrafluoropropene represented by $CF_3CF=CH_2$ or HFO-1234ze that is 1,3,3,3-tetrafluoro-1-propene represented by $CF_3CH=CHF$) or difluoromethane (HFC-32) represented by a chemical formula $CH_2F_2$ is used as the substance to be mixed with the substance having such a property as to cause a disproportionation reaction for producing the refrigerant mixture. However, the substance is not limited thereto and HC-290 (propane) or the like may be mixed. Any substance may be used as long as the substance has such thermal performance as to be capable of being used as the refrigerant of a refrigeration cycle apparatus, and any mixing ratio may be adopted.

Here, when some strong energy is applied to the substance having such a property as to cause a disproportionation reaction, in a state in which a distance between the adjacent substances is extremely small, such as in a liquid state or a two-phase state, the adjacent substances may react with each other to turn into a different substance. Therefore, when the substance having such a property as to cause a disproportionation reaction is used as the refrigerant without any countermeasures in the refrigerant circuit, the substance may not only turn into a different substance to fail to function as the refrigerant but also cause an accident, e.g., pipe rupture due to a sudden pressure rise caused by heat generation. Therefore, in order to use the substance having such a property as to cause a disproportionation reaction as the refrigerant, efforts to prevent the occurrence of the disproportionation reaction are required at a location in the refrigerant circuit, at which the substance is in the liquid state or the two-phase state corresponding to the mixed state of the gas and the liquid. Here, energy generated when the refrigerant and a structure collide against each other is a factor for the substance to cause the disproportionation reaction. Therefore, a structure of reducing the collision energy applied to the refrigerant is provided to components of the refrigerant such that the possibility that the disproportionation reaction may occur is reduced.

[Expansion Device 16 (16a to 16d)]

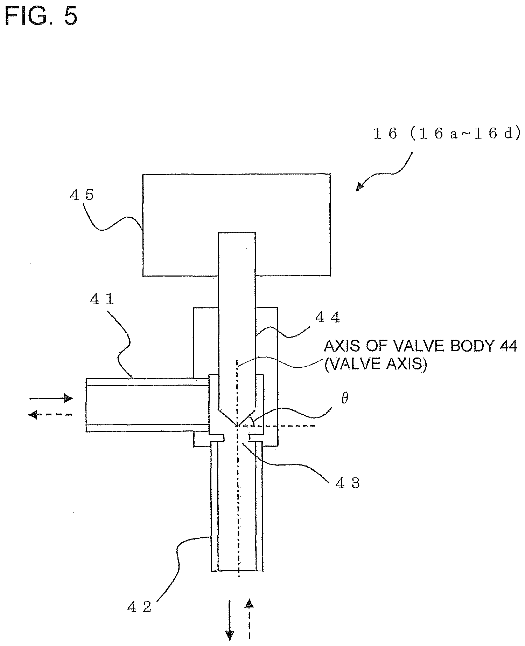

Fig. 5 is a schematic view of a configuration of the expansion device 16 (16a to 16d) according to the first embodiment of the present invention. In Fig. 5, the expansion device 16 includes a first connecting pipe 41, a second connecting pipe 42, an expansion unit 43, a valve body 44, and a motor 45. In Fig. 5, the solid arrows indicate a direction of flow of the refrigerant during the heating operation, whereas the dotted arrows indicate a direction of flow of the refrigerant during the cooling operation.

The first connecting pipe 41 is connected to a pipe on the extension pipe 4 side. When the heat source-side heat exchanger 12 acts as the evaporator and the load-side heat exchanger 15 acts as the condenser, the first connecting pipe 41 functions as a refrigerant inflow-side pipe. When the heat source-side heat exchanger 12 acts as the condenser and the load-side heat exchanger 15 acts as the evaporator, the first connecting pipe 41 functions as a refrigerant outflow-side pipe. Further, the second connecting pipe 42 is connected to a pipe on the load-side heat exchanger 15 side. When the heat source-side heat exchanger 12 acts as the evaporator and the load-side heat exchanger 15 acts as the condenser, the second connecting pipe 42 functions as a refrigerant outflow-side pipe. When the heat source-side heat exchanger 12 acts as the condenser and the load-side heat exchanger 15 acts as the evaporator, the second connecting pipe 42 functions as a refrigerant inflow-side pipe. Here, as illustrated in Fig. 5, the first connecting pipe 41 and the second pipe 42 are respectively arranged in directions perpendicular to each other through the expansion unit 43 sandwiched therebetween.

The expansion unit 43 including a valve seat is arranged between the first connecting pipe 41 and the second connecting pipe 42, and adjusts a flow of the refrigerant passing therethrough depending on a degree of insertion of the valve body 44 into an opening portion of the valve seat so as to reduce a pressure of the refrigerant. The valve body 44 is movable and controls a flow rate of the refrigerant and a pressure of the refrigerant (throttling amount) passing through the expansion device 16 in cooperation with the expansion unit 43. For the control, the valve body 44 is moved to change a distance (positional relationship) between the valve body 44 and the expansion unit 43 so as to change an area of a gap (opening area) between the expansion unit 43 and the valve body 44, thereby changing and controlling the flow rate of the refrigerant and the pressure of the refrigerant. The motor 45 moves the valve body 44 based on an instruction from the controller 60 so as to adjust the distance between the expansion unit 43 and the valve body 44. The motor 45 is, for example, a stepping motor or the like.

As described above, during the cooling operation in which the load-side heat exchanger 15 acts as the evaporator, high-pressure liquid refrigerant flowing out of the outdoor unit 1 into the indoor unit 2 flows from the second connecting pipe 42. In the expansion unit 43, the high-pressure liquid refrigerant is throttled and reduced in pressure by the valve body 44 into low-temperature and low-pressure two-phase refrigerant, which then flows out of the first connecting pipe 41 into the load-side heat exchanger 15 (15a to 15d). At this time, a position (vertical position in Fig. 5) of the valve body 44 is controlled by the motor 45 to change the opening area between the expansion unit 43 and the valve body 44, through which the refrigerant passes, thereby controlling the amount of expansion of the refrigerant. Here, the valve body 44 has, for example, a cylindrical (columnar) shape. With a cylindrical shape, a sectional area remains unchanged when the valve body 44 is moved in an axial direction of the valve body 44 while rotating. Therefore, the valve body 44 having a cylindrical shape is easy to use as the valve body 44 of the expansion device 16. Then, a direction of the refrigerant flowing into the expansion device 16 through the first connecting pipe 41 and a direction of the refrigerant flowing out thereof through the second connecting pipe 42 are approximately perpendicular to each other. During the cooling operation, the refrigerant flowing into the expansion device 16 from the second connecting pipe 42 comes into collision against the valve body 44 having a cylindrical shape in a longitudinal direction (valve axis direction). When the refrigerant flows in the axial direction in a structure having a cylindrical shape, the refrigerant collides against a circular portion at an axial end. At the collision between the refrigerant and the circular portion of the valve body 44 at the axial end (a boundary (edge) portion between a side surface of the cylinder and a bottom surface thereof), large collision energy is generated. Therefore, there is a fear that, for the substance having such a property as to cause a disproportionation reaction in the refrigerant, the generation of large collision energy may be a factor that causes the disproportionation reaction.

Meanwhile, as described above, during the heating operation in which the load-side heat exchanger 15 acts as the condenser, the high-pressure liquid refrigerant flowing out of the load-side heat exchanger 15 (15a to 15d) flows into the expansion device 16 through the first connecting pipe 41. In the expansion unit 43, the high-pressure liquid refrigerant is throttled and reduced in pressure by the valve body 44 into low-temperature and low-pressure two-phase refrigerant, which then flows out of the expansion device 16 through the second connecting pipe 42 to flow out of the indoor unit 2. At this time, the direction of the refrigerant flowing into the expansion device 16 through the first connecting pipe 41 and the direction of the refrigerant flowing out thereof through the second connecting pipe 42 are approximately perpendicular to each other. During the heating operation, the refrigerant comes into collision against the valve body 44 having the cylindrical shape in a lateral direction (circumferential direction). It is well known that a disturbance component is generated in the refrigerant by a small amount when the refrigerant flows in the lateral direction (circumferential direction) with respect to the structure having the cylindrical shape. Therefore, the disproportionation reaction of the refrigerant does not occur.

Thus, a distal end portion of the valve body 44 (bottom surface portion of the column of the valve body 44 on a flow side) is formed to have a structure (for example, a conical structure or the like) having an inclination at an angle $\theta$ larger than 0 (zero) with respect to a direction (lateral (horizontal) direction, circumferential direction in Fig. 5) perpendicular to the direction (longitudinal (vertical) direction, axial direction in Fig. 5) of flow of the refrigerant flowing into the expansion device 16 through the second connecting pipe 42. When the above-mentioned structure is provided to the valve body 44, the valve body 44 has the inclination at the angle $\theta$ larger than 0 (zero) with respect to the direction of flow of the refrigerant. Therefore, the collision energy generated between the refrigerant and the valve body 44 is reduced correspondingly. As a result, the disproportionation reaction is unlikely to occur.

Here, the collision energy generated between the valve body 44 and the refrigerant is obtained by Expression (1).
[Math. 1]

$$\text{COLLISION ENERGY} = \text{MASS OF REFRIGERANT} \times \text{CHANGE IN FLOW SPEED OF REFRIGERANT}$$

$$= (\text{MASS FLOW RATE OF REFRIGERANT} \times \text{UNIT TIME}) \times \text{CHANGE IN FLOW SPEED OF REFRIGERANT} \qquad \cdots (1)$$

In Expression (1), the change in flow speed of the refrigerant depends on the angle θ at the distal end portion of the valve body 44, and is expressed by Expression (2).
[Math. 2]

$$\text{CHANGE IN FLOW SPEED OF REFRIGERANT} \propto \cos(\theta) \qquad \cdots (2)$$

Specifically, the collision energy generated between the refrigerant and the valve body 44 is proportional to Expression (2), and a decreasing rate of the collision energy is obtained by a difference from 1 corresponding to a result of calculation of Expression (2), where θ is 0 (zero). Thus, when the valve body 44 is formed to have the structure with the angle θ having a value larger than 0 (zero) with respect to the direction (circumferential direction) perpendicular to the axial direction, the collision energy generated with the refrigerant is reduced. As a result, the disproportionation reaction unlikely occurs. Further, the degree of reduction of the collision energy, which is required to prevent the occurrence of the disproportionation reaction of the refrigerant, differs depending on a state (pressure and temperature) of the refrigerant, the flow speed of the refrigerant, and other conditions. However, a great effect is obtained when the collision energy is reduced by 5% or larger as compared to collision energy generated in related-art expansion devices. The effect of reducing the collision energy by 5% can be obtained when the result of calculation of Expression (2) is 0.95. At this time, θ is about 18 degrees. Therefore, when the angle θ with respect to the direction (circumferential direction) perpendicular to the axial direction of the valve body 44 is set to be equal to or larger than 18 degrees or larger, specifically, the valve body 44 is formed to have an opening angle of the cone of 144 degrees or smaller, the effect of reducing the collision energy is increased. An upper limit of the angle θ is not particularly defined as long as the opening angle of the cone, which allows the opening area for the refrigerant to be effectively varied between the expansion unit 43 and the valve body 44, can be ensured (when the angle θ is too large, the functions as the expansion device cannot be fulfilled).

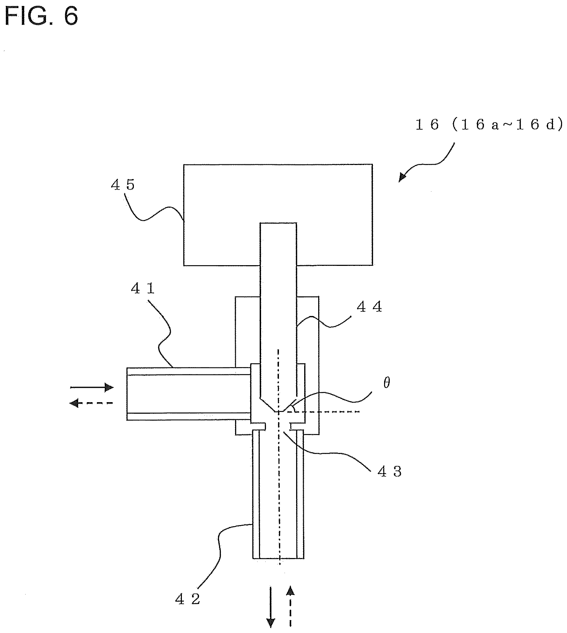

Fig. 6 is a schematic view of another example of the configuration of the expansion device 16 (16a to 16d) according to the first embodiment of the present invention. Here, the structure of the distal end of the valve body 44 of the expansion device 16 (16a to 16d) is not limited to that having the conical shape, and may also be a polyhedral structure. For example, it is only necessary that a large part of the distal end of the valve body 44 have the inclination at the angle θ larger than 0 (zero) with respect to the direction (circumferential direction) perpendicular to the direction of flow of the refrigerant flowing into the expansion device 16 through the second connecting pipe 42. As illustrated in Fig. 6, a part of the valve body 44 may have a disc-like shape (truncated conical shape) perpendicular to the flow. In this case, it is only necessary that a portion having the inclination at the angle θ larger than 0 (zero) with respect to the direction (circumferential direction) perpendicular to the direction of flow of the refrigerant flowing into the expansion device 16 through the second connecting pipe 42 occupy 50% or larger of the sectional area of the valve body 44 in the circumferential direction.

Further, although the stepping motor or another member is used as the motor 45 of the expansion device 16 as described above, the motor 45 is not limited thereto. When the stepping motor is used as the motor 45, the valve body 44 is moved vertically while rotating, thereby varying the opening area. In a case where the vertical movement is made during the rotation, when the conical structure is provided to the axial end of the valve body 44, the shape is not changed along with the rotation. Therefore, it is easy to control the opening area. Further, there are a direct acting type expansion device configured to directly drive the valve body 44 by the motor 45 and a gear type expansion device including a gear provided between the motor 45 and the valve body 44. The present invention is applicable to both the types, and the same effects are obtained thereby.

The case is described where the refrigerant flows into the expansion device 16 through the first connecting pipe 41 and flows out thereof through the second connecting pipe 42 during the heating operation and flows into the expansion device 16 through the second connecting pipe 42 and flows out thereof through the first connecting pipe 41 during the cooling operation. It is apparent that the functions as the expansion device 16 are not impaired even when each of the direction of flow of the refrigerant during the cooling operation and that during the heating operation is the opposite direction. Therefore, the refrigerant may be caused to flow in any of the directions. In both the cases, as long as the direction of the refrigerant flowing into the expansion device 16 during the cooling operation and that during the heating operation are opposite to each other, the refrigerant flows into the expansion device 16 through the second connecting pipe 42 during any of the cooling operation and the heating operation. Therefore, the same effects are obtained.

Further, as described above, not the high-pressure liquid refrigerant but the high-pressure two-phase refrigerant sometimes flows into the expansion device 16. The two-phase refrigerant is refrigerant containing a mixture of refrigerant in the form of gas and refrigerant in the form of liquid. The occurrence of the disproportionation reaction is required to be prevented even for the liquid refrigerant contained in the two-phase refrigerant. Hence, the use of the same structure is effective.

Further, the case is described where the first connecting pipe 41 and the second connecting pipe 42 are arranged in the directions perpendicular to each other and the direction of flow during the cooling operation and the direction of flow during the heating operation are made opposite to each other. However, the present invention is not limited thereto. The operation state of this refrigeration cycle apparatus only needs to include an operation state in which the refrigerant flows into the expansion device 16 through the second connecting pipe 42 so that the refrigerant flows into the expansion device 16 in the axial direction of the valve body 44. Thus, the second connecting pipe 42 may continuously function as an inflow pipe. Further, the passage of the refrigerant may be formed to extend in a direction that is not perpendicular to the axial direction of the valve body 44 after the passage around the valve body 44. It is apparent that the flow of the refrigerant may be first directed in the direction perpendicular to the axial direction of the valve body 44 after the passage around the valve body 44 and then further changed so that the first connecting pipe 41 is directed in a direction parallel to the second connecting pipe 42.

[Extension Pipes 4]

As described above, the refrigeration cycle apparatus 100 according to this embodiment has some operation modes. In those operation modes, the refrigerant flows through the extension pipes 4 configured to connect the outdoor unit 1 and the indoor units 2 to each other.

Although the high-pressure detection device 37 and the low-pressure detection device 38 are installed so as to control a high pressure and a low pressure in the refrigeration cycle to target values, a temperature detection device configured to detect the saturation temperature may be provided instead.

Further, although the four-way valve is used for the first refrigerant flow switching device 11, the first refrigerant flow switching device 11 is not limited thereto. A plurality of two-way passage switching valves or a plurality of three-way passage switching valves may be used so that the refrigerant flows in the same way.

Further, the fans are generally mounted on the heat source-side heat exchanger 12 and the load-side heat exchangers 15a to 15d, and the condensation or evaporation is promoted by sending air in many cases, but the present invention is not limited thereto. For example, panel heaters utilizing radiation or other such devices may be used as the load-side heat exchangers 15a to 15d, and a water-cooled device for transferring heat with water or an antifreeze solution may also be used as the heat source-side heat exchanger 12. Any heat exchangers may be used as long as the heat exchangers have a structure capable of rejecting or taking away heat.

Further, although the case where the number of load-side heat exchangers 15a to 15d is four is described as an example, any number of load-side heat exchangers may be connected. In addition, a plurality of the indoor units 1 may be connected to form a single refrigeration cycle.

Further, although the refrigeration cycle apparatus 100 of the type for switching the cooling and the heating in which the indoor units 2 perform any one of the cooling operation and the heating operation is described as an example, the refrigeration cycle apparatus is not limited thereto. For example, the present invention is also applicable to a refrigeration cycle apparatus including the indoor units 2, each capable of arbitrarily selecting any one of the cooling operation and the heating operation, so that a mixed operation with the indoor unit 2 performing the cooling operation and the indoor unit 2 performing the heating operation can be performed as the entire system, and the same effects are obtained thereby.

Further, the present invention is also applicable to an air-conditioning apparatus such as a room air-conditioning apparatus to which only one indoor unit 2 can be connected, a refrigeration apparatus to which a showcase or a unit cooler is connected, and other apparatus. The same effects can be obtained as long as the refrigeration cycle apparatus uses the refrigeration cycle.

Second Embodiment

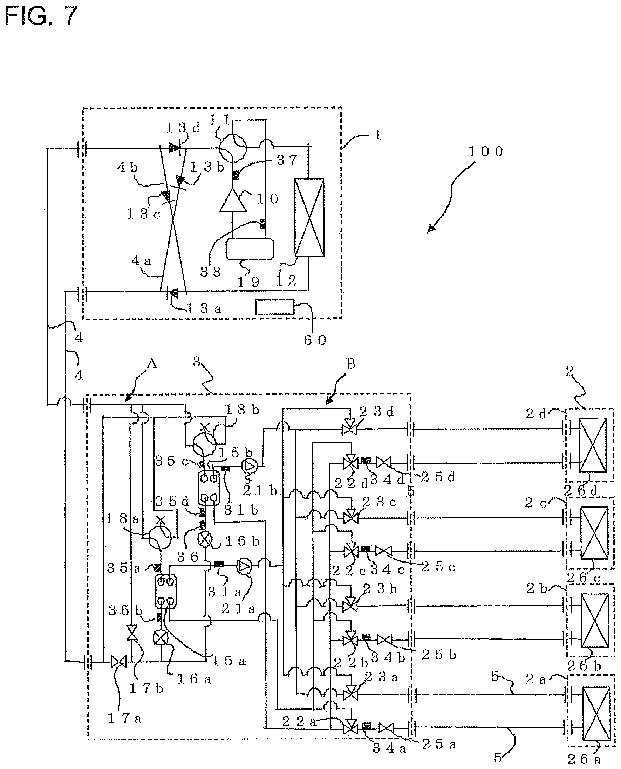

A second embodiment of the present invention is described referring to the drawings. Fig. 7 is a circuit diagram of a refrigeration cycle apparatus according to the embodiment of the present invention. The refrigeration cycle apparatus 100 illustrated in Fig. 7 includes the indoor unit 1 and a heat medium relay unit 3 connected by the extension pipes 4 inside which the refrigerant flows through the load-side heat exchanger 15a and the load-side heat exchanger 15b included in the heat medium relay unit 3. Further, the heat medium relay unit 3 and the indoor units 2 are connected by pipes 5 inside which a heat medium such as water or brine flows through the load-side heat exchanger 15a and the load-side heat exchanger 15b.

Operation modes executed by the refrigeration cycle apparatus 100 include a cooling only operation mode in which all the driven indoor units 2 perform the cooling operation and a heating only operation mode in which all the driven indoor units 2 perform the heating operation. Further, the operation modes also include a cooling main operation mode executed when a cooling load is larger and a heating main operation mode executed when a heating load is larger.

[Cooling Only Operation Mode]

In the case of the cooling only operation mode, high-temperature and high-pressure gas refrigerant discharged from the compressor 10 flows into the heat source-side heat exchanger 12 through the first refrigerant flow switching device 11, is condensed and liquefied into high-pressure liquid refrigerant while rejecting heat to circumambient air, and passes through a check valve 13a to flow out of the outdoor unit 1. Then, the high-pressure liquid refrigerant passes through the extension pipe 4 to flow into the heat medium relay unit 3. The refrigerant flowing into the heat medium relay unit 3 passes through an opening and closing device 17a and is expanded by the expansion devices 16a and 16b into low-temperature and low-pressure two-phase refrigerant. The two-phase refrigerant flows into each of the load-side heat exchanger 15a and the load-side heat exchanger 15b, acting as the evaporator, to take away heat from the heat medium circulating through a heat medium circulation circuit B to turn into low-temperature and low-pressure gas refrigerant. The gas refrigerant flows out of the heat medium relay unit 3 through a second refrigerant flow switching device 18a and a second refrigerant flow switching device 18b. Then, the gas refrigerant passes through the extension pipe 4 to flow into the outdoor unit 1 again. The refrigerant flowing into the outdoor unit 1 passes through a check valve 13d to be sucked into the compressor 10 again through the first refrigerant flow switching device 11 and the accumulator 19.

In the heat medium circulation circuit B, the heat medium is cooled with the refrigerant in both the load-side heat exchanger 15a and the load-side heat exchanger 15b. The cooled heat medium is caused to flow inside the pipes 5 by pumps 21 a and 21 b. The heat medium flowing into use-side heat exchangers 26a to 26d through second heat medium flow switching devices 23a to 23d takes away heat from indoor air. The indoor air is cooled to cool the indoor space 7. The refrigerant flowing out of the use-side heat exchangers 26a to 26d flows into heat medium flow control devices 25a to 25d, passes through first heat medium flow switching devices 22a to 22d to flow into the load-side heat exchanger 15a and the load-side heat exchanger 15b so as to be cooled, and is sucked into the pumps 21 a and 21 b again. The heat medium flow control devices 25a to 25d corresponding to the use-side heat exchangers 26a to 26d without a heat load are fully closed. Further, the opening degree of the heat medium flow control devices 25a to 25d corresponding to the use-side heat exchangers 26a to 26d without a heat load is adjusted so as to control the heat load in the use-side heat exchangers 26a to 26d.

[Heating Only Operation Mode]

In the case of the heating only operation mode, the high-temperature and high-pressure gas refrigerant discharged from the compressor 10 passes through the first connecting pipe 4a and a check valve 13b through the first refrigerant flow switching device 11 to flow out of the indoor unit 1. Then, the gas refrigerant passes through the extension pipe 4 to flow into the heat medium relay unit 3. The refrigerant flowing into the heat medium relay unit 3 passes through the second refrigerant flow switching device 18a and the second refrigerant flow switching device 18b to flow into each of the load-side heat exchanger 15a and the load-side heat exchanger 15b to turn into high-pressure liquid refrigerant while rejecting heat to the heat medium circulating through the heat medium circulation circuit B. The high-pressure liquid refrigerant is expanded by the expansion devices 16a and 16b into low-temperature and low-pressure two-phase refrigerant, which then passes through an opening and closing device 17b to flow out of the heat medium relay unit 3. Then, the low-temperature and low-pressure two-phase refrigerant passes through the extension pipe 4 to flow into the outdoor unit 1 again. The refrigerant flowing into the outdoor unit 1 passes through a second connecting pipe 4b and a check valve 13c to flow into the heat source-side heat exchanger 12 acting as the evaporator to turn into low-temperature and low-pressure gas refrigerant while taking away heat from the circumambient air. The gas refrigerant is sucked into the compressor 10 again through the first refrigerant flow switching device 11 and the accumulator 19. An operation of the heat medium in the heat medium circulation circuit B is the same as that in the cooling only operation mode. In the heating only operation mode, the heat medium is heated with the refrigerant in the load-side heat exchanger 15a and the load-side heat exchanger 15b and rejects heat to the indoor air in the use-side heat exchanger 26a and the use-side heat exchanger 26b so as to heat the indoor space 7.

[Cooling Main Operation Mode]

In the case of the cooling main operation mode, the high-temperature and high-pressure gas refrigerant discharged from the compressor 10 flows into the heat source-side heat exchanger 12 through the first refrigerant flow switching device 11 and is condensed into the two-phase refrigerant while rejecting heat to the circumambient air, which then passes through the check valve 13a to flow out of the outdoor unit 1. Then, the two-phase refrigerant passes through the extension pipe 4 to flow into the heat medium relay unit 3. The refrigerant flowing into the heat medium relay unit 3 passes through the second refrigerant switching device 18b to flow into the load-side heat exchanger 15b acting as the condenser to turn into high-pressure liquid refrigerant while rejecting heat to the heat medium circulating through the heat medium circulation circuit B. The high-pressure liquid refrigerant is expanded by the expansion device 16b into low-temperature and low-pressure two-phase refrigerant. The two-phase refrigerant flows into the load-side heat exchanger 15a acting as the evaporator through the expansion device 16a to turn into low-pressure gas refrigerant while taking away heat from the heat medium circulating through the heat medium circulation circuit B, which then flows out of the heat medium relay unit 3 through the second refrigerant flow switching device 18a. Then, the low-pressure gas refrigerant passes through the extension pipe 4 to flow into the outdoor unit 1 again. The refrigerant flowing into the outdoor unit 1 passes through the check valve 13d to be sucked into the compressor 10 again through the first refrigerant flow switching device 11 and the accumulator 19.

In the heat medium circulation circuit B, heating energy of the refrigerant is transferred to the heat medium in the load-side heat exchanger 15b. Then, the heated heat medium is caused to flow inside the pipes 5 by the pump 21 b. The heat medium is caused to flow into the use-side heat exchangers 26a to 26d, for which a heating request is made, by operating the first heat medium flow switching devices 22a to 22d and the second heat medium flow switching devices 23a to 23d, and rejects heat to the indoor air. The indoor air is heated to heat the indoor space 7. On the other hand, cooling energy of the refrigerant is transferred to the heat medium in the load-side heat exchanger 15a. Then, the cooled heat medium is caused to flow through the pipes 5 by the pump 21 a. The heat medium is caused to flow into the use-side heat exchangers 26a to 26d, for which a cooling request is made, by operating the first heat medium flow switching devices 22a to 22d and the second heat medium flow switching devices 23a to 23d, and takes away heat from the indoor air. The indoor air is cooled to cool the indoor space 7. The heat medium flow control devices 25a to 25d corresponding to the use-side heat exchangers 26a to 26d without a heat load are fully closed. Further, the opening degree of the heat medium flow control devices 25a to 25d corresponding to the use-side heat exchangers 26a to 26d with a heat load is adjusted so as to control a heat load in the use-side heat exchangers 26a to 26d.

[Heating Main Operation Mode]

In the case of the heating main operation mode, the high-temperature and high-pressure gas refrigerant discharged from the compressor 10 flows through the first refrigerant flow switching device 11 and then passes through the first connecting pipe 4a and the check valve 13b to flow out of the outdoor unit 1. Then, the high-temperature and high-pressure gas refrigerant passes through the extension pipe 4 to flow into the heat medium relay unit 3. The refrigerant flowing into the heat medium relay unit 3 passes through the second refrigerant switching device 18b to flow into the load-side heat exchanger 15b acting as the condenser to turn into high-pressure liquid refrigerant while rejecting heat to the heat medium circulating through the heat medium circulation circuit B. The high-pressure liquid refrigerant is expanded by the expansion device 16b into low-temperature and low-pressure two-phase refrigerant. The two-phase refrigerant flows into the load-side heat exchanger 15a acting as the evaporator through the expansion device 16a to take away heat from the heat medium circulating through the heat medium circulation circuit B, and then flows out of the heat medium relay unit 3 through the second refrigerant flow switching device 18a. Then, the two-phase refrigerant passes through the extension pipe 4 to flow into the outdoor unit 1 again. The refrigerant flowing into the outdoor unit 1 passes through the second connecting pipe 4b and the check valve 13c to flow into the heat-source side heat exchanger 12 acting as the evaporator to turn into low-temperature and low-pressure gas refrigerant while taking away heat from the circumambient air. The gas refrigerant is sucked into the compressor 10 again through the first refrigerant flow switching device 11 and the accumulator 19. An operation of the heat medium in the heat medium circulation circuit B and operations of the first heat medium flow switching devices 22a to 22d, the second heat medium flow switching devices 23a to 23d, the heat medium flow switching devices 25a to 25d, and the use-side heat exchangers 26a to 26d are the same as those in the cooling main operation mode.

[Kinds of Refrigerant and Expansion Device 16 (16a, 16b)]

For kinds of refrigerant and the expansion devices 16 (16a, 16b), those having the configurations described in the first embodiment can be applied. The same effects are obtained also in the refrigeration cycle apparatus 100 of this embodiment.

[Extension Pipe 4 and Pipe 5]

In each of the operation modes according to this embodiment, the refrigerant flows through the extension pipes 4 configured to connect the indoor unit 1 and the heat medium relay unit 3, whereas the heat medium such as water or the antifreeze solution flows through the pipes 5 configured to connect the heat medium relay unit 3 and the indoor units 2.

When the heating load and the cooling load are generated in a mixed manner in the use-side heat exchangers 26, the first heat medium flow switching device 22 and the second heat medium switching device 23 corresponding to the use-side heat exchanger 26 performing the heating operation is switched to a flow connected to the load-side heat exchanger 15b used for heating. Further, the first heat medium flow switching device 22 and the second heat medium flow switching device 23 corresponding to the use-side heat exchanger 26 performing the cooing operation is switched to a flow connected to the load-side heat exchanger 15a used for cooling. Therefore, each of the indoor units 2 can freely perform the heating operation or the cooling operation.

The first heat medium flow switching devices 22 and the second heat medium flow switching devices 23 may be any heating medium flow switching devices such as a three-way valve capable of switching a three-way passage or a combination of two opening and closing valves capable of opening and closing a two-way passage as long as the flow can be switched. Further, a switching device such as a stepping-motor driven mixing valve capable of changing a flow rate of the three-way passage, a combination of two switching devices such as electronic expansion valves, each capable of changing a flow rate of the two-way passage, or the like may be used as the first heat medium flow switching devices 22 and the second head medium flow switching devices 23. Further, the heat medium flow control devices 25 may be control valves other than the two-way valves, each having a three-way passage, so as to be installed together with a bypass pipe configured to bypass the use-side heat exchangers 26. Further, the heat medium flow control devices 25 are preferably of stepping motor driven type capable of controlling the flow rate through the passage, and may be any of two-way valves and three-way valves having one closed end. Further, as the heat medium flow control devices 25, those configured to open and close the two-way passage, such as opening and closing valves, may be used to repeat ON/OFF so as to control an average flow rate.

Further, although each of the first refrigerant flow switching device 11 and the second refrigerant flow switching devices 18 is described as the four-way valve, those devices are not limited thereto. A plurality of two-way switching valves or three-way switching valves may be used so that the refrigerant flows in the same manner.

Further, it is apparent that the same effects are obtained even when only one use-side heat exchanger 26 and only one heat medium flow control device 25 are connected. Further, it is apparent that no problem arises even when a plurality of the load-side heat exchangers 15 performing the same operation and a plurality of the expansion devices 16 performing the same operation are installed. Further, although the case where the heat medium flow control devices 25 are built in the heat medium relay unit 3 is described, the heat medium flow control devices 25 are not limited thereto. The heat medium flow control devices 25 may be built in the indoor units 2, and the heat medium relay unit 3 and the indoor units 2 may be formed independently of each other.

As the heating medium, for example, brine (antifreeze solution), a mixed liquid of brine and water, a mixed liquid of water and an additive having a high anticorrosion effect, or the like can be used. Therefore, in the refrigeration cycle apparatus 100, even when the heat medium leaks into the indoor space 7 through the indoor units 2, the heat medium having high safety is used, which therefore contributes to improvement of safety.

Further, the fans are generally mounted on the heat source-side heat exchanger 12 and the use-side heat exchangers 26a to 26d, and the condensation or evaporation is promoted by sending air in many cases, but the present invention is not limited thereto. For example, panel heaters utilizing radiation or other such devices may be used as the use-side heat exchangers 26a to 26d. Further, a water-cooled device for transferring heat with water or an antifreeze solution may also be used as the heat source-side heat exchanger 12. Any heat exchangers may be used as long as the heat exchangers have a structure capable of rejecting or taking away heat.

Further, although the case where the number of use-side heat exchangers 26a to 26d is four is described as an example, any number of use-side heat exchangers may be connected. In addition, a plurality of the indoor units 1 may be connected to form a single refrigeration cycle.

Further, although the case where the number of the load-side heat exchangers 15a and 15b is two is described, it is apparent that the number of load-side heat exchangers is not limited thereto. Any number of load-side heat exchangers may be installed as long as the heat medium can be cooled and/or heated.

The number of each of the pumps 21 a and 21 b is not limited to one. A plurality of pumps having a small capacity may be arranged in parallel.

Further, for the system in which the compressor 10, the four-way valve (first refrigerant flow switching device) 11, and the heat source-side heat exchanger 12 are accommodated in the outdoor unit 1, the use-side heat exchangers 26 configured to exchange heat between the air in the space to be air-conditioned and the refrigerant are each accommodated in the corresponding indoor units 2, the load-side heat exchangers 15 and the expansion devices 16 are accommodated in the heat medium relay unit 3, the outdoor unit 1 and the heat medium relay unit 3 are connected by the extension pipes 4 to circulate the refrigerant therethrough, each of the indoor units 2 and the heat medium relay unit 3 are connected by a set of the two pipes 5 to circulate the heat medium therethrough, and heat is exchanged between the refrigerant and the heat medium in the load-side heat exchangers 15, the system capable of performing the mixed operation by the indoor unit 2 performing the cooling operation and the indoor unit 2 performing the heating operation is described as an example. However, the system is not limited thereto. For example, the present invention is also applicable to a system in which the outdoor unit 1 described in the first embodiment and the heat medium relay unit 3 are combined so that the indoor units 2 perform only the cooling operation or the heating operation, and the same effects are obtained thereby.

Third Embodiment

In the first embodiment and the second embodiment described above, the device configuration configured to suppress the collision energy of the refrigerant containing the substance having such a property as to cause a disproportionation reaction is described for the expansion devices 16 configured to form a main refrigerant circuit, through which a large amount of refrigerant passes. However, the device configuration described above is applied not only to the expansion devices 16 on the main refrigerant circuit. For example, the device configuration can also be applied to an expansion device installed on a bypass circuit included in the refrigeration cycle apparatus.

Reference Signs List

1 heat source apparatus (outdoor unit) 2a, 2b, 2c, 2d indoor unit 3
4 extension pipe (refrigerant pipe) 4a first connecting pipe 4b second connecting pipe 5 pipe (heat medium pipe) 6 outdoor space 7 indoor space
8 space other than outdoor space or indoor space, e.g., roof space 9 construction, e.g., building 10 compressor 11 first refrigerant flow switching device (four-way valve) 12 heat source-side heat exchanger 13a, 13b, 13c, 13d check valve 15, 15a, 15b, 15c, 15d load-side heat exchanger 16a, 16b, 16c, 16d expansion device 17a, 17b opening and closing device 18, 18a, 18b second refrigerant flow switching device 19 accumulator 21 a, 21 b pump 22,22a, 22b, 22c, 22d first heat medium flow switching device 23, 23a, 23b, 23c, 23d second heat medium flow switching device 25, 25a, 25b, 25c, 25d heat medium flow control device 26, 26a, 26b, 26c, 26d use-side heat exchanger 27 load-side heat exchanger liquid refrigerant temperature detection device 28 load-side heat exchanger gas refrigerant temperature detection device 37 high-pressure detection device 38 low-pressure detection device 41 first connecting pipe 42 second connecting pipe 43 expansion unit 44 valve body 45 motor 60 controller 100 refrigeration cycle apparatus A refrigerant circulation circuit B heat medium circulation circuit

**Claims**

1. An expansion device configured to form part of a refrigerant circuit using refrigerant containing a substance having such a property as to cause a disproportionation reaction, the expansion device comprising:

   a valve body having a cylindrical shape; and
   an expansion unit including a valve seat, the expansion unit being configured to vary an opening area thereof by insertion of the valve body into the valve seat through movement of the valve body in an axis direction thereof,

   wherein a distal end portion of the valve body to be inserted into the expansion unit is formed to have an angle larger than 0 from a direction perpendicular to the axial direction of the valve body.

2. The expansion device of claim 1, wherein the distal end portion of the valve body has a conical shape or a polyhedral shape.

3. The expansion device of claim 1 or 2, wherein the valve body is moved while rotating to vary the opening area.

4. The expansion device of any one of claims 1 to 3, wherein the angle is equal to or larger than 18 degrees.

5. The expansion device of any one of claims 1 to 3, wherein, when the angle is $\theta$, $\cos(\theta)$ is equal to or smaller than 0.95.

6. The expansion device of any one of claims 1 to 5, wherein the refrigerant to be used comprises 1,1,2-trifluoroethylene or a refrigerant mixture containing 1,1,2-trifluoroethylene.

7. A refrigeration cycle apparatus, comprising a compressor, a first heat exchanger, the expansion device of any one of claims 1 to 6, and a second heat exchanger connected by a refrigerant pipe to form a refrigerant circuit.

8. The refrigeration cycle apparatus of claim 7, wherein refrigerant in a liquid state or refrigerant in a two-phase state is caused to flow into the expansion device.

9. The refrigeration cycle apparatus of claim 7 or 8, wherein the refrigerant circuit is configured so that a direction of the refrigerant flowing through the expansion device in a case where the second heat exchanger acts as a condenser and a direction of the refrigerant flowing through the expansion device in a case where the second heat exchanger acts as an evaporator are opposite to each other.

10. The refrigeration cycle apparatus of claim 9, wherein
the expansion device has a structure in which an inflow direction of the refrigerant and an outflow direction of the refrigerant are approximately perpendicular to each other, and
the refrigerant is caused to flow into the expansion device in the axial direction of the valve body in any of the case where the second heat exchanger acts as the condenser and the case where the second heat exchanger acts as the evaporator.

11. The refrigeration cycle apparatus of claim 9, wherein:

the expansion device has a structure in which an inflow direction of the refrigerant and an outflow direction of the refrigerant are approximately perpendicular to each other; and
the refrigerant is caused to flow into the expansion device in the axial direction of the valve body when the second heat exchanger is caused to act as the evaporator and is caused to flow into the expansion device in a direction perpendicular to the axial direction of the valve body when the second heat exchanger is caused to act as the condenser.

12. The refrigeration cycle apparatus of any one of claims 7 to 11, further comprising:

a plurality of indoor units, each configured to air-condition a space to be air-conditioned; and
one or a plurality of heat source-side units.

13. The refrigeration cycle apparatus of any one of claims 7 to 12, wherein:

the expansion device and the second heat exchanger are accommodated in each of plurality of indoor units; and
the refrigerant is caused to flow into the expansion device in a direction perpendicular to the axial direction of the valve body when the second heat exchanger is caused to act as the condenser.

14. The refrigeration cycle apparatus of any one of claims 7 to 12, wherein the expansion device and the second heat exchanger are accommodated in a relay unit installable as a body independent of an outdoor unit and a plurality of indoor units at a position away from the outdoor unit and the plurality of indoor units.

FIG. 1

FIG. 2

FIG. 3

FIG. 4

FIG. 5

16 (16a~16d)

45

41

44
AXIS OF VALVE BODY 44
(VALVE AXIS)

θ

43

42

FIG. 6

45

16 (16a~16d)

41

44

θ

43

42

FIG. 7

## INTERNATIONAL SEARCH REPORT

| International application No. |
| --- |
| PCT/JP2014/057036 |

**A. CLASSIFICATION OF SUBJECT MATTER**
*F25B41/06*(2006.01)i, *F25B1/00*(2006.01)i, *F25B13/00*(2006.01)i

According to International Patent Classification (IPC) or to both national classification and IPC

**B. FIELDS SEARCHED**

Minimum documentation searched (classification system followed by classification symbols)
F25B41/06, F25B1/00, F25B13/00

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2009-222361 A  (Daikin Industries, Ltd.), 01 October 2009 (01.10.2009), paragraphs [0005] to [0007], [0047], [0055] to [0063], [0093], [0114] to [0119]; fig. 1, 2 (Family: none) | 1–14 |
| Y | WO 2012/157764 A1  (Asahi Glass Co., Ltd.), 22 November 2012 (22.11.2012), paragraph [0013] (Family: none) | 1–14 |
| Y | JP 2003-329157 A  (Saginomiya Seisakusho, Inc.), 19 November 2003 (19.11.2003), paragraph [0058]; fig. 1 (Family: none) | 3 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 May, 2014 (21.05.14) | 03 June, 2014 (03.06.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/057036

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 078618/1984(Laid-open No. 191776/1985)<br>(Kabushiki Kaisha Fuji Koki Seisakusho),<br>19 December 1985 (19.12.1985),<br>specification, page 4, line 19 to page 5, line 8; fig. 1<br>(Family: none) | 3 |
| Y | JP 2013-160331 A (Saginomiya Seisakusho, Inc.),<br>19 August 2013 (19.08.2013),<br>paragraphs [0047] to [0050], [0058] to [0060];<br>fig. 1 to 4<br>(Family: none) | 4-5 |
| Y | JP 8-170753 A (Fuji Koki Corp.),<br>02 July 1996 (02.07.1996),<br>paragraphs [0014] to [0015]; fig. 3 to 4<br>(Family: none) | 4-5 |
| Y | Microfilm of the specification and drawings annexed to the request of Japanese Utility Model Application No. 078621/1984(Laid-open No. 191860/1985)<br>(Kabushiki Kaisha Fuji Koki Seisakusho),<br>19 December 1985 (19.12.1985),<br>specification, page 4, line 17 to page 7, line 12; fig. 1<br>& US 4650156 A         & US 4703545 A | 10-11,13 |
| Y | WO 2010/050002 A1 (Mitsubishi Electric Corp.),<br>06 May 2010 (06.05.2010),<br>paragraph [0017]; fig. 3<br>& US 2011/0185756 A1     & EP 2309199 A1<br>& CN 102112818 A | 14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 12157764 A